# EUROPEAN PATENT SPECIFICATION

(11) **EP 1 883 518 B1**
(45) Date of publication and mention of the grant of the patent: **03.08.2011**
(21) Application number: 06768504.0
(22) Date of filing: 17.05.2006
(51) Int. Cl.: B29C 31/06, B01F 3/12, B01F 7/00, B29B 7/38, B29B 7/88, B65G 65/48, G01F 11/24

(54) **QUANTITATIVE POWDER SUPPLYING DEVICE AND METHOD OF QUANTITATIVE SUPPLYING THE POWDER**
QUANTITATIVE PULVERABGABEVORRICHTUNG UND VERFAHREN ZUR QUANTITATIVEN PULVERABGABE
DISPOSITIF D'ALIMENTATION QUANTITATIVE DE POUDRE ET PROCEDE D'ALIMENTATION QUANTITATIVE DE LA POUDRE

(30) Priority: 23.05.2005 KR 20050043208; 12.05.2006 KR 20060042832
(43) Date of publication of application: 06.02.2008
(73) Proprietor: Fine Technics Co., Ltd., Gimpu-city, Gyeonggi-do 415-802 (KR)
(72) Inventor: BACK, Seung Hoon, Gwangmyung-city, Gyeonggi-do 423-733 (KR)
(74) Representative: Neilson, Martin Mark
(86) International application number: PCT/KR2006/001833
(87) International publication number: WO 2006/126795

(56) References cited:
- EP-A2- 0 438 661
- DE-A1- 4 019 032
- JP-A- 2000 211 745
- JP-A- 2001 072 250
- JP-A- 2001 072 250
- KR-A- 930 010 223
- KR-A- 20010 077 603
- KR-A- 20010 077 603
- US-A- 5 861 180

## Description

### TECHNICAL FIELD

The present invention relates to an apparatus and method for supplying powder quantitatively and a material supplying apparatus including the apparatus for supplying powder quantitatively.

### BACKGROUND ART

Plastic goods having a desired color or special function can be produced by using additives having the desired color or special function in plastic materials (e.g., LDPE, EVA, PP, PET, PC, PVC, etc.) while molding the plastic materials using a process of extrusion or injection.

However, since additives are mostly powder or liquid, it is technically difficult to uniformly mix them with the plastic materials and thus the plastic materials have a different distribution density, making the color of the plastic goods bridged or spotted. Therefore, it is very difficult to produce plastic goods having the desired color or special function.

To uniformly mix powder with the plastic materials, the plastic materials are previously coated with a required amount of powder, the powder and the plastic materials are fused by melting them together, or concentrated powder is provided to the plastic materials using a carrier, etc. However, since it is necessary to separately measure or transfer the powder, the plastic goods have a very low productivity, and the measured amount of powder is different from the used amount of powder, causing the plastic goods to be of low quality.

To solve the problem of the conventional methods, a gravimetric quantitative feeding method using a microbalance or a volumetric quantitative feeding method using a micro-screw have been suggested. However, since these two methods cannot prevent the powder from bridging, generating static electricity, and flying into air due to the measurement or transfer of the powder, it is difficult to supply powder quantitatively.

US 5,861,180 discloses a powder molding apparatus and method for molding powder according to a desired shape. A feeder supplies powder to a moveably die with electronic control means configured to regulate the amount of powder supplied to the die. KR-A-2001 0077603 discloses an apparatus according to the preamble of claim 1.

### BRIEF DESCRIPTION OF THE DRAWINGS

The above and other features and advantages of the present invention will become more apparent by describing in detail exemplary embodiments thereof with reference to the attached drawings in which:
FIG. 1 is a perspective view of an apparatus for supplying powder quantitatively according to an embodiment of the present invention;
FIG. 2 is an exploded perspective view of the apparatus for supplying powder quantitatively illustrated in FIG. 1;
FIG. 3 is a side cross-sectional view of a gearbox included in the apparatus for supplying powder quantitatively illustrated in FIG. 1;
FIG. 4 is a cross-sectional perspective view of a powder storing case illustrated in FIG. 1;
FIG. 5 is a partial cross-sectional view of a rotor illustrated in FIG. 2;
FIG. 6 is a cross-sectional view of a powder storing case applied to the apparatus for supplying powder quantitatively according to another embodiment of the present invention;
FIG. 7 is a cross-sectional view of a transfer disk taken along a line VII-VII illustrated in FIG. 2;
FIGS. 8 and 9 are plan views for illustrating an operating mechanism of the apparatus for supplying powder quantitatively according to an embodiment of the present invention;
FIG. 10 is a cross-sectional view of a material supply apparatus according to an embodiment of the present invention; and
FIG. 11 is a flowchart illustrating a method of supplying powder quantitatively according to an embodiment of the present invention.

### DETAILED DESCRIPTION OF THE INVENTION

### Technical Goal of the Invention

The present invention provides an apparatus and method for supplying powder quantitatively that does not prevent powder from being bridged but derives bridging property in order to avoid an ununiform supply of quantitative powder due to a partial change in the bulk density of the powder caused by an external factor such as pressure, moisture, static electricity or the like which is applied to the powder being held or transferred, compresses the powder completely thereby uniforming bulk density of the transferred powder, and measures a predetermined volume of the powder by precisely separating a necessary amount of the powder from the compressed powder, thereby precisely controlling the amount of supplied powder, and a material supply apparatus that mixes the powder provided by the apparatus for supplying powder quantitatively and a plastic material effectively.

### Disclosure of the Invention

According to an aspect of the present invention, there is provided an apparatus for supplying powder quantitatively to a place where required, the apparatus comprising: a driving part to generate a driving force using an external power; a powder supply part connected to the driving part, to follow the operation of the driving part, and to transfer the powder according to a predetermined path; a chamber placed on the sides of the powder supply part and to receive the powder transferred by the powder supply part; said apparatus characterized by a compression part to compress the transferred powder in the chamber; and a quantitative supply part to separate a desired amount of powder from the compressed powder and to discharge the separated powder from the chamber.

The driving part may comprise a gear box comprising: a plurality of gears to receive a rotational torque from outside and to rotate at a predetermined speed ratio; and a plurality of rotation shafts fixed to the gears to rotate about their axes by the rotation of the gears, and extending in a longitudinal direction.

The powder supply part may comprise: an upper plate fixed outside of the gear box and through which one or more than one rotation shafts of the plurality of rotation shafts passes; and a powder pushing unit equipped on the upper plate, to rotate clockwise or counterclockwise in contact with the upper surface of the upper plate by the rotation shafts, and to transfer the powder to the chamber.

The chamber may comprise a sub-supply block comprising: a first space part with a predetermined diameter and depth opened toward the powder supply part to receive the powder provided by the powder supply part, and through which one of the rotation shafts of the gear box passes upward and is disposed in the center thereof; and a second space part with a predetermined diameter and depth formed at the sides of the first space part, opened to the first space part to receive the powder from the first space part, and through which another rotation shaft of the gear box passes upward and is disposed in the center thereof.

The compression part may comprise: at least one feeding gear placed inside the first space part and to rotate by the rotation shafts and having a plurality of gear teeth to transfer the powder provided by the powder supply part to the second space part; a transfer disk placed inside the second space part and to rotate by the rotation shafts, and having a circular arc powder pressing groove, and to receive the compressed powder transferred through the feeding gear; and a cover main body placed on the transfer disk, partly covering the powder pressing groove, and to support the powder to the powder pressing groove.

The quantitative supply part may comprise a blade having a leading end part to enter into the powder pressing groove, to partly cut the compressed powder in the powder pressing groove during the rotation of the transfer disk, and to discharge the cut powder from the second space part.

The apparatus may further comprise; a crushing pin fixed in the cover main body to crush the compressed bulk of powder while the bridged powder is being transferred and compressed by the feeding gear, and to transfer the crushed powder to the powder pressing groove.

The transfer disk may comprise: an inner disk having a predetermined diameter to be rotated by the rotation shaft; an outside ring having the same axis as the inner disk, and the inner circumference spaced apart from the exterior circumference of the inner disk to form the powder pressing groove; and a packing member inserted into the lower-part of the powder pressing groove to upwardly support the powder stored in the powder pressing groove.

A projection is formed at the bottom part of the second space part to press the powder approaching the blade to the cover main body by moving the packing member of the transfer disk upward.

The apparatus may further comprise: a powder storing case attached to the upper part of the upper plate to store powder to be provided from outside in which the upper part acts as a bottom surface, wherein the powder pushing unit comprises: a fixing unit fixed to the rotation shaft and being symmetrical around the rotation shaft; a tip unit placed in both ends of the fixing unit to move in a length direction of the fixing unit; and a spring disposed between the fixing unit and the tip unit to elastically support the tip from the fixing unit to externally, wherein two or more projections are configured to temporally compress the tip unit of the pushing unit to the fixing unit during rotation of the pushing unit, the projections formed in the inner circumference of the powder storing case.

The apparatus may further comprise: a porous plate spaced parallel apart from the upper plate in the inner surface of the powder storing case and having a plurality of through holes passing downward the powder provided from outside; and an auxiliary rotor placed on the upper surface of the porous plate, to rotate by the rotation shaft, and to induce the powder to the through holes.

According to another aspect of the present invention, there is provided a method of supplying powder quantitatively to a place where required, the method comprising: a preparation operation of receiving powder and preparing for the transfer of the powder; a powder transfer operation of transferring the powder to a chamber having a predetermined volume according to a predetermined path using a powder supply part that is driven by an external power and transfers the powder; said method characterized by: a compressing operation of compressing the transferred powder in a compression part of the chamber; a separating operation of separating a desired amount of powder from the powder that is compressed and bridged in the chamber using a separating means; and a discharge operation of discharging the separated powder to the outside.

The power supply part may comprise: a plurality of gears receiving a rotational torque from outside and rotating at a predetermined speed ratio; and a rotor rotating by the rotational power of the gears and transferring the powder, wherein, in the powder transfer operation, the powder is transferred to the chamber using the rotor.

The compression part performing the compressing operation may comprise a pressing tool pressing the powder, and a compression frame storing the powder and transferring pressure to the powder, wherein, in the compressing operation, the powder transferred through the powder transfer operation is compressed by the operation of the compression part.

In the separating operation, the separating means may be used to volume-separate the powder from the compressed powder by entering a blade in a relative motion with regard to the powder into the compressed powder in chamber to a predetermined depth.

### Effect of the Invention

The present invention does not prevent powder from being bridged but derives bridging property in order to avoid an non-uniform supply of quantitative powder due to a partial change in the bulk density of the powder caused by an external factor such as pressure, moisture, static electricity or the like which is applied to the powder being held or transferred, compresses the powder completely thereby uniforming bulk density of the transferred powder, and measures a predetermined volume of the powder by precisely separating a necessary amount of the powder from the compressed powder, thereby precisely controlling the amount of supplied powder.

### EMBODIMENTS

The present invention will now be described more fully with reference to the accompanying drawings.

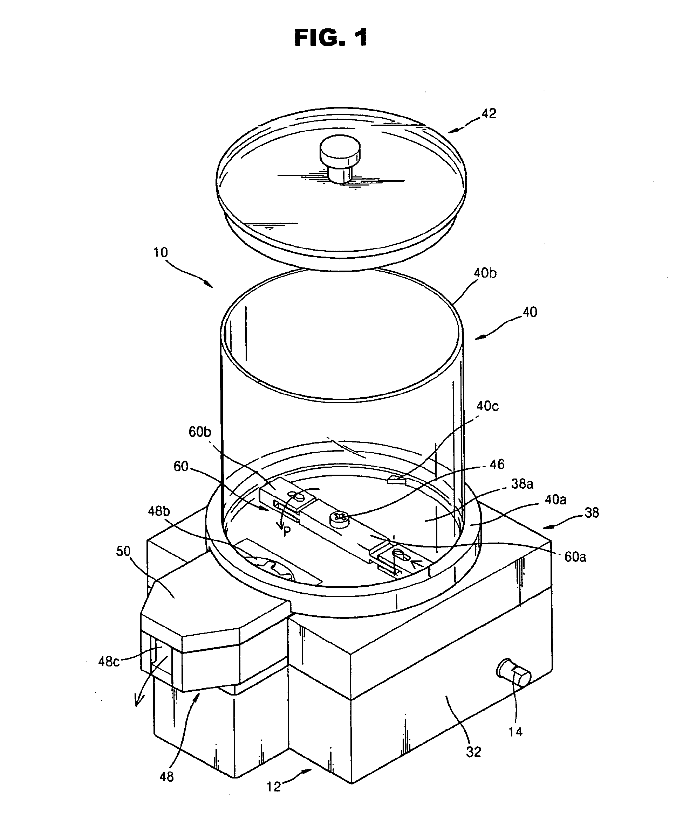

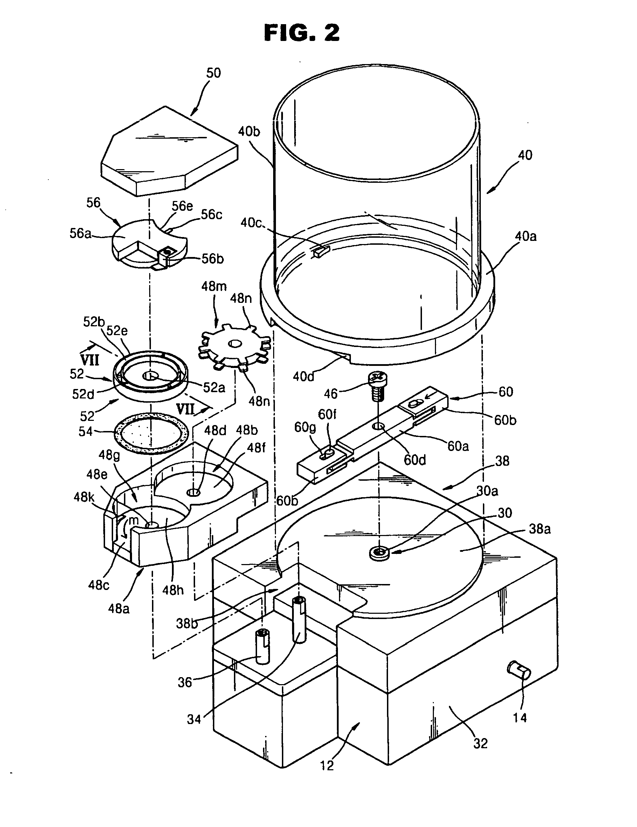

FIG. 1 is a perspective view of an apparatus 10 for supplying powder quantitatively according to an embodiment of the present invention. Referring to FIG. 1, the apparatus for supplying powder quantitatively comprises a gear box 12 receiving a rotating torque from outside and including three shafts (30, 34, and 36 illustrated in FIG. 2) on the upper portion thereof, an upper plate 38 and a quantitative supply part 48 placed on the upper part of the gear box 12, a powder storing case 40 attached to the upper part of the upper plate 38 and storing powder to be provided, a rotor 60 rotating inside the powder storing case 40 and supplying the powder to the quantitative supply part 48, and a compression plate 50 sealing the upper part of the quantitative supply part 48.

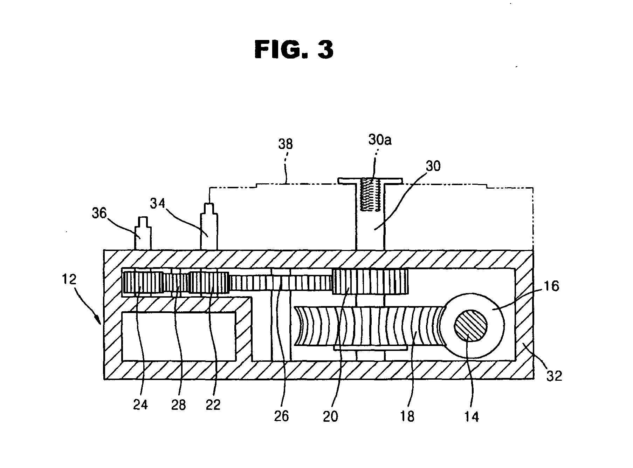

The gear box 12 rotates the three shafts 30, 34, and 36 in the same direction and at a predetermined speed ratio. The gear box 12 will now be described with reference to FIG. 3. FIG. 3 is a side cross-sectional view of the gearbox 12 included in the apparatus for supplying the quantitative powder illustrated in FIG. 1. Referring to FIG. 3, the gear box 12 comprises a casing 32 enclosing an inner space of the gear box 12, a worm 16 horizontally installed inside the casing 32 and rotates by the torque received from a motor (not shown) outside through a driving shaft 14, a worm gear 18 engaged with the worm 16, a first gear 20 fixed into the upper part of the worm gear 18, and the first shaft 30 receiving the rotating torque from the first gear 20, extending upward to the upper part of the casing 32, and passing through the upper plate 38.

The gear box 12 further comprises a first middle gear 26, a second gear 22, a second middle gear 28, and a third gear 24 next to the first gear 20. The second gear 22 and the third gear 24 have the same size and thus are identical to each other in terms of rotating speed and direction. The first gear 20 and the second gear 22 can have a gear ratio between 3:1 and 4:1.

The second shaft 34 is fixed in the rotation center of the second gear 22, and the third shaft 36 is fixed in the rotation center of the third gear 24. The second shaft 34 and the third shan 36 extend to the upper part of the casing 32 and are parallel to each other.

The first shaft 30 rotates a rotor 60, and the second shaft 34 rotates a feeding gear (48m illustrated in FIG. 2.), and the third shaft 36 rotates a transfer disk (52 illustrated in FIG. 2).

Referring to FIG. 1, the upper plate 38 placed on the upper part of the gear box 12 is a metal block providing a flat surface on which the powder storing case 40 is attached. The upper surface of the upper plate 38 and the lower part of the powder storing case 40 are connected to each other so that powder does not leak out.

A support plane (38a illustrated in FIG. 2) with a predetermined diameter is projected from the upper center of the upper plate 38. The support plane 38a acts as a bottom surface of the powder storing case 40. The rotor 44 goes over the support plane 38a.

The powder storing case 40 comprises a sealing ring 40a tightly attached to the upper plate 38 and including the support plane 38a, a cylindrical case body 40b fixed to the sealing ring 40a and extending to the upper part thereof, and a cap 42 covering the case body 40b and sealing the case 40. The case body 40b and the cap 42 can be formed of a transparent acryl.

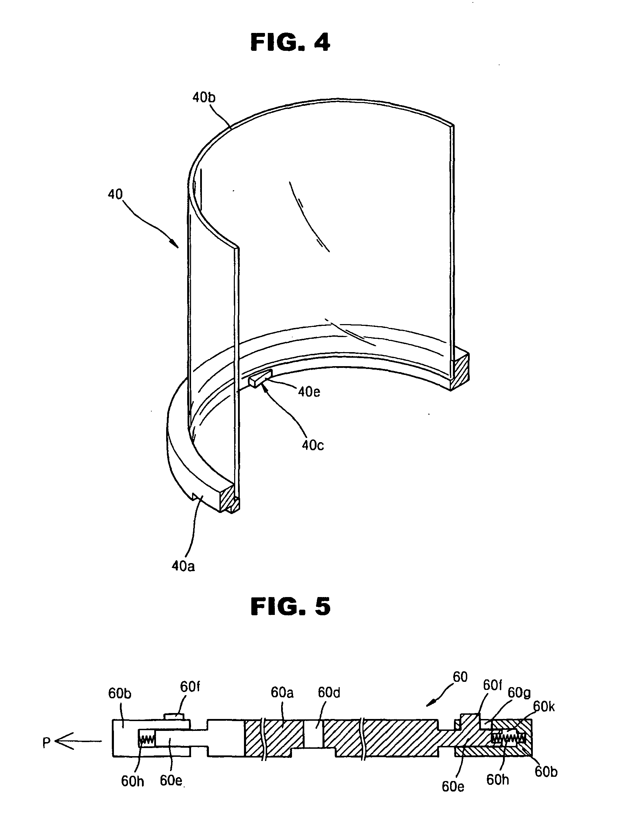

The sealing ring 40a includes a projection 40c in its inner circumference. The end parts of the rotor 60 that rotates in a direction p cross over the projection 40c having an incline surface (40e illustrated in FIG. 4). The incline surface 40e moves elastic tips 60b that are end parts of the rotor 60 in a direction t. If the elastic tips 60b move in the direction to a spring (60h illustrated in FIG. 5) disposed between the elastic tips 60b and a fixing rod 60a is compressed.

Therefore, when the end parts of the rotor 60 cross over the projection 40c, the elastic tips 60b instantly moves in an opposite direction of the direction t from the fixing rod 60a via an elastic restoration force, causing a shock. This will be in detail describe d with reference to FIG. 5. Powder on the rotor 60 is separated from the rotor 60 due to the shock generated when the rotor 60 crosses over the projection 40c.

The quantitative supply part 48 receives powder through a first space 48b which is partially included in the inner space of the powder storing case 40, compresses the powder separates a desired amount of the powder from the compressed powder using a blade (56b illustrated in FIG. 2), and discharges the desired amount of the power to an outlet 48c.

The compression plate 50 covers the quantitative supply part 48, presses a disk cover (56 illustrated in FIG. 2), and simultaneously seals the inner space of the quantitative supply part 48 to prevent external impurities from entering into the quantitative supply part 48.

FIG. 2 is an exploded perspective view of the apparatus for supplying the quantitative powder illustrated in FIG. 1. Referring to FIG. 2, the first, second, and third shafts 30, 34, and 36 extend upward from the gear box 12. The first shaft 30 passes through the upper part of the upper plate 38 and is located at the center of the support plane 38a.

A storing groove 38b that stores a part of the quantitative supply part 48 is formed in a portion of the support plane 38a. The storing groove 38b is a stepped groove and enters into the support plane 38a.

The maximum length of the rotor 60 is the same as the diameter of the support plane 38a. This means that the storing groove 38b is partly included in a rotation radius of the rotor 60 so that the powder transferred by the rotor 60 can be supplied to the quantitative supply part 48 under the powder storing case 40.

The rotor 60 is coupled to the first shaft 30 via a bolt 46 and rotates on the support plane 38a. The bottom surface of the rotor 60 faces the upper surface of the support plane 38a. At this time, the powder between the rotor 60 and the support plane 38a acts as a lubricant. A female screw hole 30a coupled with the bolt 46 is formed on the upper end part of the first shaft 30. Therefore, if necessary, the rotor 60 can be easily separated from the first shaft 30. A leading end part of the compression plate 50 is inserted into a compressed plate inserting groove 40d.

The quantitative supply part 48 comprises a sub-supply block 48a partly inserted into the storing groove 38b, formed on the upper part of the gear box 12, and includes first and second space parts 48b and 48g on the upper part thereof, the feeding gear 48 screwed into the first space part 48b, the transfer disk 52 rotatably placed in the second space part 48g, and the disk cover 56 fixed to the upper part of the transfer disk 52 and downwardly supporting the transfer disk 52.

The upper surface of the sub-supply block 48a is flat and tightly faces the bottom surface of the compression plate 50.

The first space part 48b is a circular groove with a predetermined diameter and depth and has a through hole 48d in the center of the bottom surface 48f. The through hole 48d vertically perforates the sub-supply block 48a and passes through the upper part of the second shaft 34. The second shaft 34 is coupled to the feeding gear 48m inside the first space part 48b and rotates the feeding gear 48m in a direction.

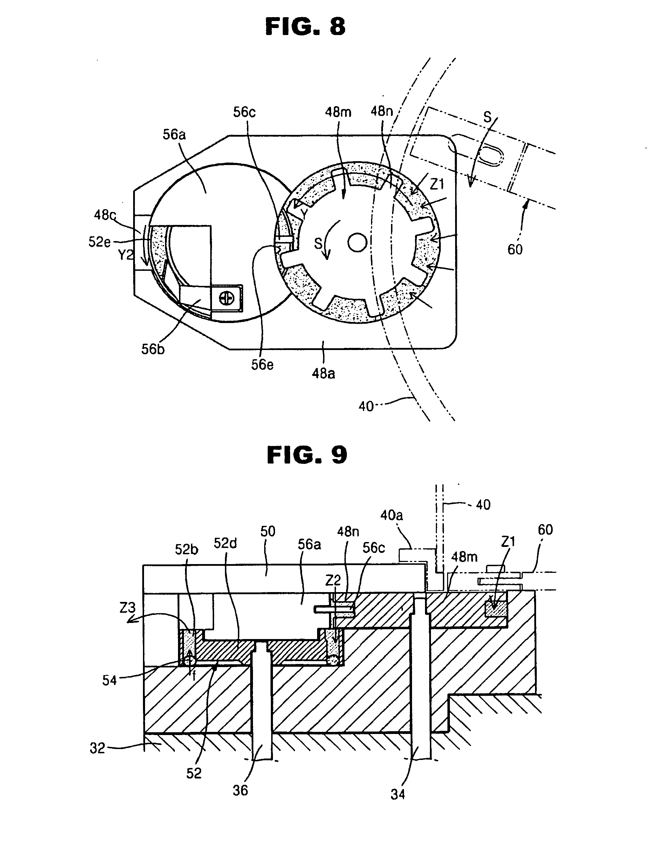

The feeding gear 48m has a plurality of gear teeth 48n at a regular interval in its outer circumference. In particular, the gear teeth 48n are divided into up and down in order to rotate the feeding gear 48m by entering a crushing pin 56c into the gear teeth 48n as described in FIG. 9.

The feeding gear 48m operates like a gear pump, receives the powder provided by the rotor 60 to the first space part 48b, and moves the powder to the second space part 48g, which will be described in detail with reference to FIG. 8. The powder is compressed and bridged white being transferred by the feeding gear 48m.

The second space part 48g is a circular groove having a predetermined diameter and is deeper than that of the first space part 48b. In the current embodiment, the inner diameter of the second space part 48g is identical to that of the first space part 48b, but the present invention is not necessarily restricted thereto.

The second space part 48g is simultaneously opened upwardly toward the first space part 48b in order to receive the powder through the first space part 48b.

A through hole 48e is formed in the center of the bottom surface 48h of the second space part 48g. The through hole 48e is vertically formed in the sub-supply bock 48a and is passed through by the upper part of the third shaft 36. The third shaft 36 is inserted into the transfer disk 52 to rotate the transfer disk 52. The transfer disk 52 and the feeding gear 48m are identical to each other in terms of rotational speed and direction.

A projection 48k is formed in the sides of the through hole. The projection 48k is formed on the bottom surface of the second space part 48g closer to a wall, and pushes a packing ring 54, which rotates in a direction m, of the lower part of the transfer disk 52 in a direction f (illustrated in FIG. 9).

The transfer disk 52 comprises an inner disk 52d having a predetermined diameter and including a shaft insertion hole 52a into which the third shaft 36 is inserted, an outside ring surrounding an inner disk and forming a powder pressing groove 52b having a predetermined width with the inner disk 52d, and the packing ring 54 inserted into the powder pressing groove 52b at the lower part of the transfer disk 52.

The packing ring 54 packs the lower part of the powder pressing groove 52b to prevent powder pressed in the powder pressing groove 52b from leaking and upwardly press the powder against the disk cover 56 after being pushed upwardly by the projection 48k. The powder pressing groove 52b stores the powder supplied by the feeding gear 48m and forms a circular arc having a predetermined width.

The disk cover 56 is formed of a Teflon resin having a predetermined thickness and covers a part of the powder pressing groove 52b using the bottom surface thereof.

The disk cover 56 comprises a cover body 56a inserted into the second space part 48g and downwardly supporting the transfer disk 52, the crushing pin 56c fixed on a portion of the cover body 56a, and the blade 56b fixed at the opposite side of the cover body 56a to the crushing pin 56c.

A circular arc-shaped groove 56e is formed at the outer circumference of the cover body 56a toward the feeding gear 48m. The circular arc-shaped groove 56e has the same curvature as the outer circumference of the feeding gear 48m and opens the powder pressing groove 52b upwardly as illustrated in FIG. 8.

The crushing pin 56c is fixed into the circular arc-shaped groove 56e. The crushing pin 56c, which is an iron core extending toward between the gear teeth 48n, crushes (bridged) compressed powder between the gear teeth 48n so that the powder pressing groove 52b can easily accommodate the crushed powder.

The blade 56b is fixed in the opposite side of the cover body 56a to the crushing pin 56c. The leading end portion of the blade 56b fixed into the cover main body 56a extends inside the powder pressing groove 52b. The maximum length of the blade 56 b that enters into the powder pressing groove 52b can be controlled according to circum stances and is in a range of about 1 mm to 3 mm.

The compression plate 50 is put on the upper part of the sub-supply block 48a after the feeding gear 48m, the transfer disk 52, and the disk cover 56 are installed in the first and second space parts 48b and 48g. The compression plate 50 supports the disk cover 56 and the feeding gear 48m and simultaneously seals a part of the first space part 48b and the second space part 48g. The compression plate 50 can be coupled to the sub-supply block 48a using any coupling methods.

FIG. 3 is a side cross-sectional view of the gearbox 12 included in the apparatus for supplying the quantitative powder 10 illustrated in FIG. 1.

FIG. 4 is a cross-sectional perspective view of the powder storing case 40 illustrated in FIG. 1. Referring to FIG. 4, the powder storing case 40 comprises the sealing ring 40a that is tightly attached to the upper plate 38, and the case body 40b of which a lower part is connected to the sealing ring 40a and extends upwardly. The projection 40c is formed in the inner circumference of the sealing ring 40a. The number of the projection 40c can be changed according to circumstances.

FIG. 5 is a partial cross-sectional view of the rotor 60 illustrated in FIG. 2. Referring to FIG. 5, the rotor 60 comprises the fixing rod 60a including the through hole 60d through which the bolt 46 passes downward in the center thereof and fixed to the first shaft 30, the elastic tips 60b place in both ends of the fixing rod 60a, and the spring 60h disposed between the fixing rod 60a and the elastic tips 60b and supporting the elastic tips 60b in the direction p.

An insertion end part 60e that is thin and integrally formed with a guide pin 60f in the upper surface thereof is disposed at both ends of the fixing rod 60a. The insertion end part 60e has a predetermined thickness and is inserted into a storing part 60k of the elastic tips 60b. The guide pin 60f is a projection having a long oval cross-section in the length direction of the rotor 60.

The elastic tips 60b stores the insertion end part 60e and is supported by the spring 60h in the direction p. A long hole 60g through which the guide pin 60f is inserted is formed in the elastic tips 60b. The long hole 60g stores the guide pin 60f and guides the elastic tips 60b to move in the length direction.

When the rotor 60 having the above structure rotates, the elastic tips 60b cross over the incline surface 40e of the projection 40c and is compressed in the opposite direction of p. When the elastic tips 60b pass through the projection 40c, the elastic tips 60b springs out in the direction p by the operation of the spring 60h so that the guide pin 60f collides with the inner circumference of the long hole 60g, generating a shock. The shock detaches the powder from the rotor 60.

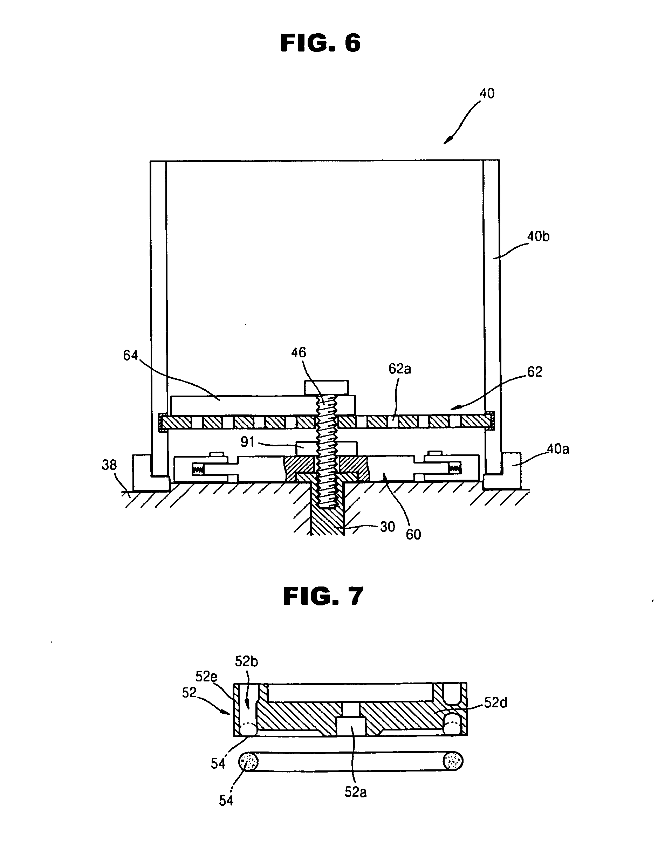

FIG. 6 is a cross-sectional view of a powder storing case applied to the apparatus for supplying quantitative powder according to another embodiment of the present invention. Referring to FIG. 6, the case body 40b comprises a porous plate 62 and an auxiliary rotor 64. The porous plate 62 is a disk type constituent having a plurality of through holes 62a and is horizontally fixed to the upper part of the rotor 60.

The auxiliary rotor 64 is placed on the upper surface of the porous plate 62, is fixed via the bolt 46, and rotates with the rotor 60. The porous plate 62 bears the weight of powder provided from outside to prevent the rotor 60 from being pressed by the weight of the powder. The auxiliary rotor 64 is used to drop the powder at a uniform distribution through the through holes 62a of the porous plate 62.

A nut 91 fixes the rotor 60 into the first shaft 30.

FIG. 7 is a cross-sectional view of the transfer disk 52 taken along a line illustrated in FIG. 2. Referring to FIG. 7, the powder pressing groove 52b having a predetermined width is disposed between the inner disk 52d and the outside ring 52e. The packing ring 54 is inserted into the lower part of the powder pressing groove 52b to seal the lower part of the powder pressing groove 52b.

FIGS. 8 and 9 are plan views for illustrating an operating mechanism of the apparatus 10 for supplying powder quantitatively according to an embodiment of the present invention. Referring to FIGS. 8 and 9, the feeding gear 48m is mounted in the first space part 48b of the sub-supply block 48a, and the transfer disk 52 and the disk cover 56 10 are mounted above and below in the second space part 48g. The feeding gear 48m and the transfer disk 52 rotate in the directions.

As indicated by a dotted line, a part of the first space part 48b is included in the powder storing case 40. Therefore, powder is pushed into the first space part 48b in the direction z1 by the rotor 60 rotating in the directions.

The powder pushed into the first space part 48b is stored between the gear teeth 48n of the feeding gear 48m, moves in the direction Y by the continuous rotation of the feeding gear 48m, and is compressed between the inner circumference of the first space part 48b. The powder moved in the direction Y enters into the lower part of the compression plate 50 so that the powder is separated from outside and is not blown away.

The powder that is transferred in the direction Y by the feeding gear 48m and is compressed by the compression plate 50 is crushed by the crushing pin 56c. Since the powder transferred by the feeding gear 48m is compressed and bridged between the gear teeth 48nr the powder can move inside the powder pressing groove 52b (in the direction z2) after being crushed by the crushing pin 56c.

The powder crushed by the crushing pin 56c moves inside the powder pressing groove 52b of the transfer disk 52 that rotates, and fills up the powder pressing groove 52b. Since the powder pressing groove 52b and the gear teeth 48n of the upper part of the powder pressing groove 52b cross each other, the powder is pressed by the gear teeth 48n and pressed in the powder pressing groove 52b. The powder that filled up the powder pressing groove 52b is compressed again the bottom surface of the cover main body 56a, and moves to the blade 56b in the direct ion Y2. The powder of the powder pressing groove 52b is pressed by the bottom surface of the cover body 56a to flatten the upper surface thereof.

In particular, the projection 48k formed on the bottom surface of the second space part 48g pushes up the packing ring 54 in the direction f so that the powder is strongly pressed upwardly and is relatively compressed by the bottom surface of the cover body.

The blade 56b cuts off the upper part of the powder that has arrived at the leading end part of the blade 56b so that the cut powder is discharged through the outlet 48c in the direction z3. The amount of discharged powder can be changed by the length of the leading end part of the blade 56b that enters into the powder pressing groove 52b or the rotational speed of the transfer disk 52.

The powder passing below the blade 56b moves to the feeding gear 48m again and is mixed with newly provided powder.

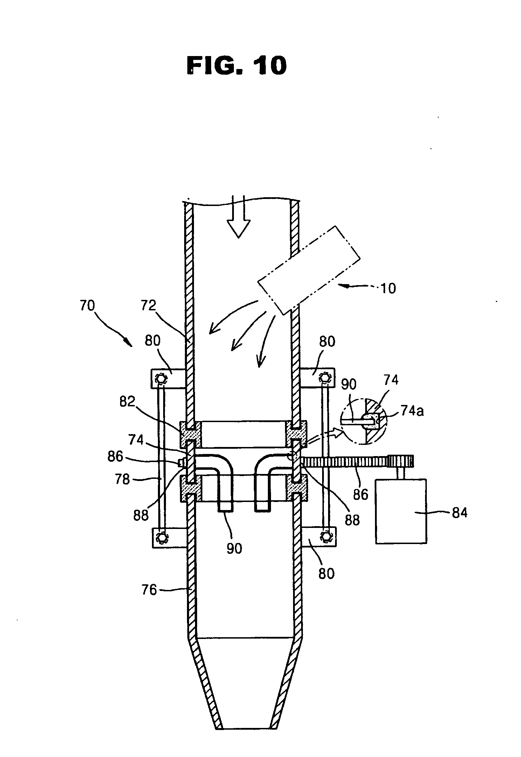

FIG. 10 is a cross-sectional view of a material supply apparatus 70 according to an embodiment of the present invention. The material is a mixture of plastic raw materials and powder.

Referring to FIG. 10, the material supply apparatus 70 comprises a pipe type upper duct 72 fixing the apparatus 10 for supplying quantitative powder in an inclined condition, a rotation duct 74 placed at the lower part of the upper duct 72, a lower duct 76 placed at the lower part of the rotation duct 74, rotatably supporting the rotation duct 74 and downwardly transferring the material, a motor 84 rotating the rotation duct 74. The upper duct 72 is a pipe having a predetermined diameter and downwardly transfers plastic raw material through a separately attached hopper (not shown). The plastic raw material falls down with the quantitative powder discharged by the apparatus 10 for supplying the quantitative powder while being transferred downward.

The rotation duct 74 is a pipe having the same size as the upper duct 72 and includes a stirring steel wire 90. The stirring steel wire 90 is a linear constituent that mixes the plastic raw material with the powder. The stirring steel wire 90 is fixed to the rotation duct 74 by inserting both ends of the stirring steel wire 90 into a groove 74a formed in the inner circumference of the rotation duct 74 and welded with the rotation duct 74. The formation or number of the stirring steel wheel 90 can be changed according to circumstances. Another stirring constituent can replace the stirring steel wire 90.

The material supply apparatus 70 further comprises a sprocket 88, a motor 84, and a chain 86 to axis-rotate the rotation duct 74. The sprocket 88 surrounds the outer circumference of the rotation duct 74 and is coupled to a driving axis of the motor 84 using the chain 86. Therefore, if the motor 84 is operated, a driving force of the motor 84 is transmitted to the sprocket 88 using the chain 86 and the rotation duct 74 axis-rotates so that the material is stirred.

Teflon bearings 82 are placed between the upper duct 72 and the rotation duct 74 and between the rotation duct 74 and the lower duct 76. The Teflon bearings 82 are formed of conventional Teflon and are used to rotate the rotation duct 74 between the upper duct 72 and the lower duct 76. The Teflon bearings 82 block the inner space of the ducts 72, 74, and 76 from outside.

Supporting rods 78 and brackets 80 are used to maintain an interval between the upper duct 72 and the lower duct 76. The brackets 80 are iron pieces fixed to the outer circumference of the upper duct 72 and the lower duct 76.

The supporting rods 78 interconnect the brackets 80 of the upper duct 72 and the lower duct 76. The upper and lower end parts of the supporting rods 78 are coupled to the brackets 80 of the upper duct 72 and the lower duct 76, respectively, to firmly maintain the interval between the upper duct 72 and the lower duct 76, which are spaced a predetermined distance from rotation duct 74.

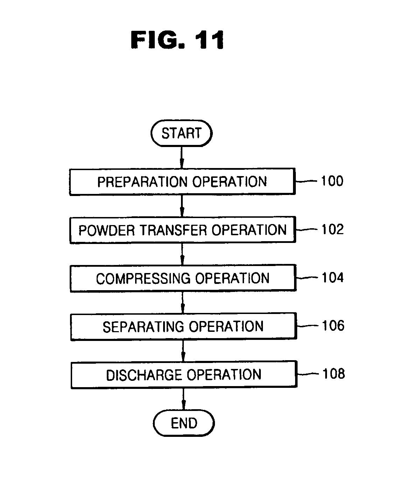

FIG. 11 is a flowchart illustrating a method of supplying powder quantitatively according to an embodiment of the present invention. Referring to FIG. 11, the method of supplying powder quantitatively comprises a preparation operation 100 of receiving quantitative supplied powder from outside and preparing transfer of the powder, a powder transfer operation 102 of transferring the powder to a chamber including the first and second space parts 48b and 48g according to a predetermined path, a compressing operation 104 of compressing the transferred powder inside the first and second space parts 48b and 48g, a separating operation 106 of separating a desired amount of the powder from the powder pressed in the second space part 48g using a separating means, and a discharge operation 108 of discharging the separated powder from the second space part 48g.

In the preparation operation 100, the powder storing case 40 receives the powder. The powder storing case 40 is disposed on the upper plate 38 and the inner circumference of the sealing ring 40a is tightly attached to the outer circumference of the support plane 38a.

In the powder transfer operation 102, the powder stored in the powder storing case 40 is transferred to the first space part 48b of the quantitative supply part 48 by rotating the rotor 60.

In the compressing operation 104, the powder transferred to the quantitative supply part 48 is compressed through the first and second space parts 48b and 48g. Sine the main gist of the present invention transfers completely compressed powder in order to avoid an non-uniform supply of quantitative powder due to a partial change in the bulk density caused by an external factor such as pressure, moisture, static electricity or the like which is applied to the power being held or transferred, using of the bridging property, the supplied quantitative powder is compressed and bridged (in the first and second space parts 48b and 48g).

The powder is compressed by the rotation of the feeding gear 48m and the transfer disk 52. As described with reference to FIG. 8, while the feeding gear 48m and the transfer disk 52 rotate using the rotational power of the second and third shafts 34 and 36, the powder is pressed into the powder pressing groove 52e by the gear teeth 48n of the feeding gear 48m.

In the separating operation 106, the desired amount of powder is separated from the compressed (lump of) powder in the second space part 48g using the blade 56b. Since the leading end part of the blade 56b enters into the powder pressing groove 52b, the blade 52b can separate the powder while the transfer disk 52 moves in the direction Y2 illustrated in FIG. 8

In the discharge operation 108, the separated powder is discharged from the second space part 48g in the direction z3 illustrated in FIG. 9. The powder discharged from the quantitative supply part 48 is transferred to a place where it is required.

While the present invention has been particularly shown and described with reference to exemplary embodiments thereof, it will be understood by those skilled in the art that various changes in form and details may be made therein without departing from the spirit and scope of the invention as defined by the appended claims. The exemplary embodiments should be considered in a descriptive sense only and not for purposes of limitation. Therefore, the scope of the present invention is defined not by the detailed description of the invention but by the appended claims, and all differences within the scope of the present invention will be construed as being included in the present invention.

## Claims

1. An apparatus for supplying powder quantitatively to a place where required, the apparatus comprising:
a driving part (12) to generate a driving force using an external power;
a powder supply part (38, 60) connected to the driving part (12), to follow the operation of the driving part (12), and to transfer the powder according to a predetermined path;
a chamber (48) placed on the sides of the powder supply part (38, 60) to receive the powder transferred by the powder supply part (38, 60);
said apparatus **characterized by**:
a compression part (48m, 52) to compress the transferred powder in the chamber (48); and
a quantitative supply part (56b) to separate a desired amount of powder from the compressed powder and to discharge the separated powder from the chamber (48).

2. The apparatus of claim 1, wherein the driving part comprises a gear box (12) comprising:
a plurality of gears (18, 20, 22, 24) to receive a rotational torque from outside and to rotate at a predetermined speed ratio; and
a plurality of rotation shafts (30, 34, 36) fixed to the gears (18, 20, 22, 24) and to rotate about their axes by the rotation of the gears (18, 20, 22, 24), and extending in a longitudinal direction.

3. The apparatus of claim 2, wherein the powder supply part comprises:
an upper plate (38) fixed outside of the gear box (12) and through which one or more than one rotation shafts (30, 34, 36) of the plurality of rotation shafts passes; and
a powder pushing unit (60) equipped on the upper plate (38), to rotate clockwise or counterclockwise in contact with the upper surface of the upper plate (38) by the rotation shafts (30, 34, 36), and to transfer the powder to the chamber (48).

4. The apparatus of claim 2, wherein the chamber (48) comprises a sub-supply block (48a) comprising:
a first space part (48b) with a predetermined diameter and depth opened toward
the powder supply part (38, 60) to receive the powder provided by the powder supply part (38, 60), and through which one of the rotation shafts (34) of the gear box (12) passes upward and is disposed in the center thereof; and
a second space part (48g) with a predetermined diameter and depth formed at the sides of the first space part (48b), opened to the first space part (48b) to receive the powder from the first space part (48b), and through which another rotation shaft (36) of the gear box (12) passes upward and is disposed in the center thereof.

5. The apparatus of claim 4, wherein the compression part (48m, 52) comprises:
at least one feeding gear (48m) placed inside the first space part (48b) to rotate by the rotation shafts (34) and having a plurality of gear teeth (48m) to transfer the powder provided by the powder supply part (38, 60) to the second space part (48g);
a transfer disk (52) placed inside the second space part (48g) to rotate by the rotation shafts (36), and having a circular arc powder pressing groove (56e, 52b), and to receive the compressed powder transferred through the feeding gear (48m); and
a cover main body (56a) placed on the transfer disk (52), partly covering the powder pressing groove (52b), to support the powder to the powder pressing groove (52b).

6. The apparatus of claim 5, wherein the quantitative supply part (56b) comprises a blade (56b) having a leading end part to enter into the powder pressing groove (56b), to partly cut the compressed powder in the powder pressing groove during the rotation of the transfer disk (52), and to discharge the cut powder from the second space part (48g).

7. The apparatus of claim 5, further comprising; a crushing pin (56c) fixed in the cover main body (56a), to crush the compressed bulk of powder while the bridged powder is being transferred and compressed by the feeding gear (48m), and to transfer the crushed powder to the powder pressing groove (52b).

8. The apparatus of claim 5, wherein the transfer disk (52) comprises:
an inner disk (52d) having a predetermined diameter to be rotated by the rotation shaft (36);
an outside ring (52e) having the same axis as the inner disk (52d), and the inner circumference spaced apart from the exterior circumference of the inner disk (52d) to form the powder pressing groove (52b); and a packing member (54) inserted into the lower part of the powder pressing groove (52b) to upwardly support the powder stored in the powder pressing groove (52b).

9. The apparatus of claim 8, wherein a projection (48k) is formed at the bottom part of the second space part (48g) to press the powder approaching the blade to the cover main body (56a) by moving the packing member of the transfer disk (52) upward.

10. The apparatus of claim 3, further comprising:
a powder storing case (40) attached to the upper part of the upper plate (38) to store powder to be provided from outside in which the upper part acts as a bottom surface, wherein the powder pushing unit (60) comprises:
a fixing unit (60a) fixed to the rotation shaft (30) and being symmetrical around the rotation shaft (30);
a tip unit (60b) placed in both ends of the fixing unit (60a) to move in a length direction of the fixing unit (60a);
and a spring (60h) disposed between the fixing unit (60a) and the tip unit (60b) to elastically support the tip (60b) from the fixing unit (60a),
wherein two or more projections (40c) are configured to temporally compress the tip unit (60b) of the pushing unit (60) to the fixing unit (60a) during rotation of the pushing unit (60), the projections (40c) formed in the inner circumference of the powder storing case (40).

11. The apparatus of claim 3, further comprising:
a porous plate (62) spaced parallel apart from the upper plate (38) in the inner surface of the powder storing case (40) and having a plurality of through holes (62a) passing downward the powder provided from outside; and
an auxiliary rotor (64) placed on the upper surface of the porous plate (62), to rotate by the rotation shaft (30), and to induce the powder to the through holes (62a).

12. A method of supplying powder quantitatively to a place where required, the method comprising:
a preparation operation (100) of receiving powder and preparing for the transfer of the powder;
a powder transfer operation (102) of transferring the powder to a chamber (48) having a predetermined volume according to a predetermined path using a powder supply part (38, 60) that is driven by an external power and transfers the powder;
said method **characterized by**:
a compressing operation (104) of compressing the transferred powder in a compression part (48m, 52) of the chamber (48);
a separating operation (106) of separating a desired amount of powder from the powder that is compressed and bridged in the chamber (48) using a separating means (56b); and
a discharge operation (108) of discharging the separated powder to the outside.

13. The method of claim 12, wherein the power supply part (38, 60) comprises:
a plurality of gears (18, 20, 22, 24) receiving a rotational torque from outside and rotating at a predetermined speed ratio; and
a rotor (60) rotating by the rotational power of the gears and transferring the powder,
wherein, in the powder transfer operation, the powder is transferred to the chamber using the rotor.

14. The method of claim 12, wherein the compression part (48m, 52) performing the compressing operation (104) comprises a pressing tool (48m, 52) pressing the powder, and a compression frame (48) storing the powder and transferring pressure to the powder,
wherein, in the compressing operation (104), the powder transferred through the powder transfer operation (102) is compressed by the operation of the compression part (48m, 52).

15. The method of claim 12, wherein, in the separating operation (106), the separating means is used to volume-separate the powder from the compressed powder by entering a blade (56b) in a relative motion with regard to the powder into the compressed powder in chamber (48) to a predetermined depth.

## Patentansprüche

1. Vorrichtung zum mengenmäßigen Zuführen von Pulver zu einer Stelle, an welcher dieses erforderlich ist, wobei die Vorrichtung umfasst:
ein Antriebsteil (12), um mittels einer externen Energie eine Antriebskraft zu erzeugen;
ein Pulverzuführungsteil (38, 60), welches mit dem Antriebsteil (12) verbunden ist, um dem Lauf des Antriebsteils (12) zu folgen und das Pulver einem vorbestimmten Weg entsprechend zu befördern;
eine Kammer (48), welche auf den Seiten des Pulverzuführungsteils (38, 60) angeordnet ist, um das Pulver entgegenzunehmen, welches von dem Pulverzuführungsteils (38, 60) befördert wird;
wobei die Vorrichtung **gekennzeichnet ist durch**:
ein Kompressionsteil (48m, 52), um das beförderte Pulver in der Kammer (48) zu komprimieren; und
ein Mengenzuführungsteil (56b), um eine erwünschte Menge des Pulvers von dem komprimierten Pulver zu trennen und das abgetrennte Pulver von der Kammer (48) zu entladen.

2. Vorrichtung nach Anspruch 1, **dadurch gekennzeichnet, dass** das Antriebsteil ein Getriebe (12) umfasst, welches umfasst:
mehrere Zahnräder (18, 20, 22, 24), um ein Drehmoment von außerhalb aufzunehmen und um sich mit einer vorbestimmten Drehgeschwindigkeit zu drehen; und
mehrere Drehwellen (30, 34, 36), welche an den Zahnrädern (18, 20, 22, 24) befestigt sind und sich durch die Drehung der Zahnräder (18, 20, 22, 24) um ihre Achsen drehen und sich in einer Längsrichtung erstrecken.

3. Vorrichtung nach Anspruch 2, **dadurch gekennzeichnet, dass** das Pulverzuführungsteil umfasst:
eine obere Platte (38), welche außerhalb des Getriebes (12) befestigt ist und durch welche eine oder mehrere Drehwellen (30, 34, 36) der mehreren Drehwellen verlaufen; und
eine Pulverschiebeeinheit (60), welche auf der oberen Platte (38) ausgestaltet ist, um sich durch die Drehwellen (30, 34, 36) im Uhrzeigersinn oder entgegen des Uhrzeigersinns in Kontakt mit der oberen Oberfläche der oberen Platte (38) zu drehen und das Pulver zu der Kammer (48) zu befördern.

4. Vorrichtung nach Anspruch 2, **dadurch gekennzeichnet, dass** die Kammer (48) einen Hilfszuführungsblock (48a) umfasst, welcher umfasst:
ein erstes Raumteil (48b) mit einem vorbestimmten Durchmesser und einer Tiefe, welches sich zu dem Pulverzuführungsteil (38, 60) öffnet, um das Pulver, das durch das Pulverzuführungsteil (38, 60) bereitgestellt wird, entgegenzunehmen, und durch welches eine der Drehwellen (34) des Getriebes (12) nach oben verläuft und in der Mitte davon angeordnet ist; und
ein zweites Raumteil (48g) mit einem vorbestimmten Durchmesser und einer Tiefe, welches seitlich des ersten Raumteils (48b) ausgebildet ist, welches sich zu dem ersten Raumteil (48b) öffnet, um das Pulver von dem ersten Raumteil (48b) entgegenzunehmen, und durch welches eine andere Drehwelle (36) des Getriebes (12) nach oben verläuft und in der Mitte davon angeordnet ist.

5. Vorrichtung nach Anspruch 4, **dadurch gekennzeichnet, dass** das Kompressionsteil (48m, 52) umfasst:
mindestens ein Vorschubrad (48m), welches innerhalb des ersten Raumteils (48b) angeordnet ist, um durch die Drehwellen (34) gedreht zu werden, und welches mehrere Zähne (48m) aufweist, um das Pulver, das durch das Pulverzuführungsteil (38, 60) bereitgestellt wird, zu dem zweiten Raumteil (48g) zu befördern;
eine Beförderungsscheibe (52), welche innerhalb des zweiten Raumteils (48g) angeordnet ist, um durch die Drehwellen (36) gedreht zu werden, und welche eine kreisbogenförmige Pulverpressvertiefung (56e, 52b) aufweist, und welche das komprimierte Pulver, welches durch das Vorschubrad (48m) befördert wird, entgegennimmt; und
ein Abdeckungshauptkörper (56a), welcher auf der Beförderungsscheibe (52) angeordnet ist und die Pulverpressvertiefung (52b) teilweise abdeckt, um das Pulver der Pulverpressvertiefung (52b) zuzuführen.

6. Vorrichtung nach Anspruch 5, **dadurch gekennzeichnet, dass** das Mengenzuführungsteil (56b) einen Arm (56b) umfasst, welcher ein führendes Endteil aufweist, um in die Pulverpressvertiefung (52b) einzudringen, um das komprimierte Pulver teilweise in der Pulverpressvertiefung während der Drehung der Beförderungsscheibe (52) zu schneiden und um das geschnittene Pulver von dem zweiten Raumteil (48g) zu entladen.

7. Vorrichtung nach Anspruch 5, **dadurch gekennzeichnet, dass** die Vorrichtung darüber hinaus umfasst: einen Zerkleinerungsstift (56c), welcher in dem Abdeckungshauptkörper (56a) vorhanden ist, um die komprimierte Masse des Pulvers zu zerkleinern während das verklumpte Pulver durch das Vorschubrad (48m) befördert und komprimiert wird, und um das zerkleinerte Pulver zu der Pulverpressvertiefung (52b) zu befördern.

8. Vorrichtung nach Anspruch 5, **dadurch gekennzeichnet, dass** die Beförderungsscheibe (52) umfasst:
eine innere Scheibe (52d) mit einem vorbestimmten Durchmesser, um durch die Drehwelle (36) gedreht zu werden;
einen äußeren Ring (52e), welcher dieselbe Achse wie die innere Scheibe (52d) aufweist, wobei der Innenumfang von dem Außenumfang der inneren Scheibe (52d) beabstandet ist, um die Pulverpressvertiefung (52b) auszubilden; und ein Packteil (54), welches in das untere Teil der Pulverpressvertiefung (52b) eingeführt wird, um das Pulver, welches in der Pulverpressvertiefung (52b) vorhanden ist, nach oben zu bringen.

9. Vorrichtung nach Anspruch 8, **dadurch gekennzeichnet, dass** ein Vorsprung (48k) auf dem Bodenteil des zweiten Raumteils (48g) ausgebildet ist, um das Pulver, welches sich dem Arm nähert, an den Abdeckungshauptkörper (56a) zu drücken, indem das Packteil der Beförderungsscheibe (52) nach oben bewegt wird.

10. Vorrichtung nach Anspruch 3, **dadurch gekennzeichnet, dass** die Vorrichtung darüber hinaus umfasst:
ein Pulveraufnahmegehäuse (40), welches an dem oberen Teil der oberen Platte (38) angebracht ist, um ein Pulver, welches von außen bereitgestellt wird, aufzunehmen, wobei der obere Teil als eine untere Oberfläche fungiert, wobei die Pulverschiebeeinheit (60) umfasst:
eine Befestigungseinheit (60a), welche an der Drehwelle (30) befestigt ist und symmetrisch um die Drehwelle (30) liegt;
eine Endeinheit (60b), welche bei beiden Enden der Befestigungseinheit (60a) angeordnet ist, um sich in einer Längsrichtung der Befestigungseinheit (60a) zu bewegen;
und eine Feder (60h), welche zwischen der Befestigungseinheit (60a) und der Endeinheit (60b) angeordnet ist, um die Endeinheit (60b) elastisch von der Befestigungseinheit (60a) zu halten,
wobei zwei oder mehrere Vorsprünge (40c) ausgestaltet sind, um vorübergehend die Endeinheit (60b) der Schiebeeinheit (60) während einer Drehung der Schiebeeinheit (60) an die Befestigungseinheit (60a) zu drücken, wobei die Vorsprünge (40c) in dem Innenumfang des Pulveraufnahmegehäuses (40) ausgebildet sind.

11. Vorrichtung nach Anspruch 3, **dadurch gekennzeichnet, dass** die Vorrichtung darüber hinaus umfasst:
eine poröse Platte (62), welche parallel beabstandet von der oberen Platte (38) in der inneren Oberfläche des Pulveraufnahmegehäuses (40) beabstandet ist und
mehrere Durchgangslöcher (62a) aufweist, welche das Pulver, welches von außen bereitgestellt wird, nach unten befördern; und
einen Hilfsrotor (64), welcher auf der oberen Oberfläche der porösen Platte (62) angeordnet ist, um durch die Drehwelle (30) gedreht zu werden und um das Pulver zu den Durchgangslöchern (62a) zu bringen.

12. Verfahren zum mengenmäßigen Zuführen von Pulver zu einer Stelle, an welcher dieses erforderlich ist, wobei das Verfahren umfasst:
einen Vorbereitungsvorgang (100), um Pulver entgegenzunehmen und die Beförderung des Pulvers vorzubereiten;
einen Pulverbeförderungsvorgang (102), um das Pulver mittels eines Pulverzuführungsteils (38, 60), welches über eine externe Energie angetrieben ist und das Pulver befördert, entsprechend einem vorbestimmten Weg zu einer Kammer (48) zu befördern, welche ein vorbestimmtes Volumen aufweist;
wobei das Verfahren **gekennzeichnet ist durch**:
einen Kompressionsvorgang (104), um das beförderte Pulver in einem Kompressionsteil (48m, 52) der Kammer (48) zu komprimieren;
einen Abtrennvorgang (106), um eine erwünschte Menge des Pulvers von dem Pulver, welches komprimiert und verklumpt in der Kammer (48) vorhanden ist, mittels Trennmitteln (56b) abzutrennen; und
einen Entladungsvorgang (108), um das abgetrennte Pulver nach außen zu entladen.

13. Verfahren nach Anspruch 12, **dadurch gekennzeichnet, dass** das Pulverzuführungsteil (38, 60) umfasst:
mehrere Zahnräder (18, 20, 22, 24), welche ein Drehmoment von außen aufnehmen und sich mit einer vorbestimmten Drehgeschwindigkeit drehen; und einen Rotor (60), welcher durch die Drehenergie der Zahnräder gedreht wird und das Pulver befördert,
wobei das Pulver bei dem Pulverbeförderungsvorgang mit Hilfe des Rotors zu der Kammer befördert wird.

14. Verfahren nach Anspruch 12, **dadurch gekennzeichnet, dass** das Kompressionsteil (48m, 52), welches den Kompressionsvorgang (104) durchführt, ein Presswerkzeug (48m, 52), welches das Pulver presst, und ein Kompressionsgehäuse (48), welches das Pulver aufnimmt und einen Druck auf das Pulver überträgt, umfasst,
wobei bei dem Kompressionsvorgang (104) das Pulver, welches durch den Pulverbeförderungsvorgang (102) befördert wird, durch den Betrieb des Kompressionsteils (48m, 52) komprimiert wird.

15. Verfahren nach Anspruch 12, **dadurch gekennzeichnet, dass** bei dem Abtrennvorgang (106) die Trennmittel verwendet werden, um ein Volumen des Pulvers von dem komprimierten Pulver zu trennen, indem ein Arm (56b) mit einer Relativbewegung bezüglich des Pulvers in das komprimierte Pulver in der Kammer (48) bis zu einer vorbestimmten Tiefe eindringt.

## Revendications

1. Appareil pour réaliser l'alimentation quantitative en poudre à un emplacement où elle est requise, l'appareil comprenant :
une partie d'entraînement (12) pour générer une force d'entraînement en utilisant une puissance externe ;
une partie d'alimentation en poudre (38, 60) reliée à la partie d'entraînement (12), pour suivre le fonctionnement de la partie d'entraînement (12), et pour transférer la poudre selon un trajet prédéterminé ;
une chambre (48) positionnée sur les côtés de la partie d'alimentation en poudre (38, 60) pour recevoir la poudre transférée par la partie d'alimentation en poudre (38, 60) ;
ledit appareil étant **caractérisé par** :
une partie de compression (48m, 52) pour comprimer la poudre transférée dans la chambre (48) ; et
une partie d'alimentation quantitative (56b) pour séparer une quantité souhaitée de poudre de la poudre comprimée et pour décharger la poudre séparée de la chambre (48).

2. Appareil selon la revendication 1, dans lequel la partie d'entraînement comprend une boîte à engrenages (12) comprenant :
une pluralité d'engrenages (18, 20, 22, 24) pour recevoir un couple de rotation à partir de l'extérieur et pour tourner à un rapport de vitesse prédéterminé ; et
une pluralité d'arbres de rotation (30, 34, 36) fixés aux engrenages (18, 20, 22, 24) et pour tourner autour de leurs axes, par l'intermédiaire de la rotation des engrenages (18, 20, 22, 24), et s'étendant dans une direction longitudinale.

3. Appareil selon la revendication 2, dans lequel la partie d'alimentation comprend en poudre :
une plaque supérieure (38) fixée à l'extérieur de la boîte à engrenages (12) et à travers laquelle un ou plusieurs arbres de rotation (30, 34, 36), parmi la pluralité d'arbres de rotation, passent ; et
une unité de poussée de poudre (60) installée sur la plaque supérieure (38), pour tourner dans le sens des aiguilles d'une montre ou dans le sens inverse des aiguilles d'une montre, en contact avec la surface supérieure de la plaque supérieure (38), par l'intermédiaire des arbres de rotation (30, 34, 36), et pour transférer la poudre à la chambre (48).

4. Appareil selon la revendication 2, dans lequel la chambre (48) comprend un bloc de sous-alimentation (48a) comprenant :
une première partie d'espace (48b) avec un diamètre et une profondeur prédéterminés, ouverte vers la partie d'alimentation en poudre (38, 60) pour recevoir la poudre fournie par la partie d'alimentation en poudre (38, 60), et à travers laquelle un des arbres de rotation (34) de la boîte à engrenages (12) passe vers le haut et est disposé au centre de celle-ci ; et
une seconde partie d'espace (48g) avec un diamètre et une profondeur prédéterminés, formée sur les côtés de la première partie d'espace (48b), donnant sur la première partie d'espace (48b) pour recevoir la poudre à partir de la première partie d'espace (48b), et à travers laquelle un autre arbre de rotation (36) de la boîte à engrenages (12) passe vers le haut et est disposé au centre de celle-ci.

5. Appareil selon la revendication 4, dans lequel la partie de compression (48m, 52) comprend :
au moins un engrenage d'alimentation (48m) positionné à l'intérieur de la première partie d'espace (48b) pour tourner, par l'intermédiaire des arbres de rotation (34), et possédant une pluralité de dents d'engrenage (48m) pour transférer la poudre fournie par la partie d'alimentation en poudre (38, 60) à la seconde partie d'espace (48g) ;
un disque de transfert (52) positionné à l'intérieur de la seconde partie d'espace (48g), pour tourner, par l'intermédiaire des arbres de rotation (36), et possédant une rainure de compression de poudre en arc circulaire (56e, 52b), et pour recevoir la poudre comprimée transférée par l'intermédiaire de l'engrenage d'alimentation (48m) ; et
un corps principal de couvercle (56a) positionné sur le disque de transfert (52), recouvrant partiellement la rainure de compression de poudre (52b), pour supporter la poudre vers la rainure de compression de poudre (52b).

6. Appareil selon la revendication 5, dans lequel la partie d'alimentation quantitative (56b) comprend une lame (56b) possédant une partie d'extrémité avant pour enter dans la rainure de compression de poudre (56b), pour couper partiellement la poudre comprimée dans la rainure de compression de poudre au cours de la rotation du disque de transfert (52), et pour décharger la poudre coupée à partir de la seconde partie d'espace (48g).

7. Appareil selon la revendication 5, comprenant en outre : une goupille d'écrasement (56c) fixée dans le corps principal de couvercle (56a), pour écraser le volume comprimé de poudre alors que la poudre en pont est en train d'être transférée et comprimée par l'engrenage d'alimentation (48m), et pour transférer la poudre écrasée à la rainure de compression de poudre (52b).

8. Appareil selon la revendication 5, dans lequel le disque de transfert (52) comprend :
un disque intérieur (52d) possédant un diamètre prédéterminé pour être tourné par l'arbre de rotation (36) ;
une bague extérieure (52e) possédant le même axe que le disque intérieur (52d), et la circonférence intérieure espacée de la circonférence extérieure du disque intérieur (52d) pour former la rainure de compression de poudre (52b) ; et un élément de garniture (54) inséré dans la partie inférieure de la rainure de compression de poudre (52b) pour supporter vers le haut la poudre stockée dans la rainure de compression de poudre (52b).

9. Appareil selon la revendication 8, dans lequel une saillie (48k) est formée dans la partie inférieure de la seconde partie d'espace (48g) pour comprimer la poudre se rapprochant de la lame sur le corps principal de couvercle (56a) en déplaçant l'élément de garniture du disque de transfert (52) vers le haut.

10. Appareil selon la revendication 3, comprenant en outré :
un boîtier de stockage de poudre (40) fixé à la partie supérieure de la plaque supérieure (38) pour stocker de la poudre devant être fournie à partir de l'extérieur, dans lequel la partie supérieure sert de surface inférieure, dans lequel l'unité de poussée de poudre (60) comprend :
une unité de fixation (60a) fixée à l'arbre de rotation (30) et étant symétrique autour de l'arbre de rotation (30) ;
une unité d'embout (60b) positionnée dans les deux extrémités de l'unité de fixation (60a) pour se déplacer dans un sens de la longueur de l'unité de fixation (60a) ;
et un ressort (60h) disposé entre l'unité de fixation (60a) et l'unité d'embout (60b) pour supporter élastiquement l'embout (60b) à partir de l'unité de fixation (60a),
dans lequel deux saillies, ou plus, (40c) sont configurées pour comprimer temporairement l'unité d'embout (60b) de l'unité de poussée (60) sur l'unité de fixation (60a) au cours de la rotation de l'unité de poussée (60), les saillies (40c) étant formées dans la circonférence intérieure du boîtier de stockage de poudre (40).

11. Appareil selon la revendication 3, comprenant en outre :
une plaque poreuse (62) espacée parallèlement de la plaque supérieure (38) dans la surface intérieure du boîtier de stockage de poudre (40) et possédant une pluralité de trous débouchants (62a) faisant passer vers le bas la poudre fournie à partir de l'extérieur ; et
un rotor auxiliaire (64) positionné sur la surface supérieure de la plaque poreuse (62), pour tourner, par l'intermédiaire de l'arbre de rotation (30), et pour pousser la poudre vers les trous débouchants (62a).

12. Procédé pour réaliser l'alimentation quantitative en poudre à un emplacement où elle est requise, le procédé comprenant :
une opération de préparation (100) consistant à recevoir de la poudre et à préparer pour le transfert de la poudre ;
une opération de transfert de poudre (102) consistant à transférer la poudre à une chambre (48) possédant un volume prédéterminé selon un trajet prédéterminé en utilisant une partie d'alimentation en poudre (38, 60) qui est entraînée par une puissance externe et transfère la poudre ;
ledit procédé étant **caractérisé par** :
une opération de compression (104) consistant à comprimer la poudre transférée dans une partie de compression (48m, 52) de la chambre (48) ;
une opération de séparation (106) consistant à séparer une quantité souhaitée de poudre de la poudre qui est comprimée et en pont dans la chambre (48) en utilisant un moyen de séparation (56b) ; et
une opération de décharge (108) consistant à décharger la poudre séparée vers l'extérieur.

13. Procédé selon la revendication 12, dans lequel la partie d'alimentation en poudre (38, 60) comprend :
une pluralité d'engrenages (18, 20, 22, 24) recevant un couple de rotation à partir de l'extérieur et tournant à un rapport de vitesse prédéterminé ; et
un rotor (60) tournant, par l'intermédiaire de la puissance de rotation des engrenages, et transférant la poudre,
dans lequel, dans l'opération de transfert de poudre, la poudre est transférée à la chambre en utilisant le rotor.

14. Procédé selon la revendication 12, dans lequel la partie de compression (48m, 52) réalisant l'opération de compression (104) comprend un outil de compression (48m, 52) comprimant la poudre, et un cadre de compression (48) stockant la poudre et transférant une pression à la poudre,
dans lequel, dans l'opération de compression (104), la poudre transférée par l'intermédiaire de l'opération de transfert de poudre (102) est comprimée par le fonctionnement de la partie de compression (48m, 52) .

15. Procédé selon la revendication 12, dans lequel, dans l'opération de séparation (106), le moyen de séparation est utilisé pour séparer en volume la poudre de la poudre comprimée en faisant entrer une lame (56b), dans un mouvement relatif par rapport à la poudre, dans la poudre comprimée dans la chambre (48) jusqu'à une profondeur prédéterminée.
